# FASCICULE DE BREVET EUROPEEN

(11) **EP 1 176 087 B1**
(45) Date de publication et mention de la délivrance du brevet: **11.02.2004**
(21) Numéro de dépôt: 01117347.3
(22) Date de dépôt: 18.07.2001
(51) Int. Cl.: B62D 55/24, B62D 55/253, B29C 37/00, B29D 29/08

(54) **Chenille en matériau élastomérique**
Gummiraupenkette
Elastomeric track

(30) Priorité: 27.07.2000 FR 0009885
(43) Date de publication de la demande: 30.01.2002
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: Gauthier, Gilbert, 63800 Cournon D'Auvergne (FR)
(74) Mandataire: Diernaz, Christian

(56) Documents cités:
- EP-A- 0 351 492
- EP-A- 0 893 334
- DE-A- 1 800 353
- FR-A- 957 422
- GB-A- 2 209 814

## Description

L'invention concerne les chenilles en caoutchouc pour véhicules et plus particulièrement le renforcement desdites chenilles.

Dans ce qui suit on désigne par matériau élastomérique un matériau comportant au moins un élastomère pouvant être renforcé par au moins une charge de renforcement comme par exemple du noir de carbone; les élastomères diéniques, les polyuréthannes ainsi que les caoutchoucs thermoplastiques entre autres sont des exemples de matériaux élastomériques.

Une chenille pour véhicule comprend en général :
- une bande formant une boucle fermée suivant une direction longitudinale de largeur donnée (dans une direction transversale) présentant une surface intérieure et une surface extérieure, ladite bande étant principalement composée d'au moins un matériau élastomérique,
- sur la surface extérieure de la bande, d'une pluralité d'éléments de relief formant une sculpture destinés à venir en contact avec le sol pour assurer une bonne motricité au véhicule équipé de cette chenille, eux mêmes en matériau élastomérique ,
- sur la surface intérieure de la bande, d'une pluralité de dents en matériau élastomérique comportant des faces latérales et des faces avant et arrière (ces dernières étant espacées dans la direction longitudinale), ces dents étant destinées au moins au guidage de cette chenille, afin d'assurer un bon couplage entre la chenille et le véhicule équipé de cette chenille.

En outre et compte de tenu des efforts supportés par une chenille montée sur un véhicule, il est connu de prévoir à l'intérieur de la bande au moins une armature de renforcement assurant la stabilité dimensionnelle de la chenille dans la direction longitudinale correspondant à la direction de la boucle formée par ladite chenille. Cette armature de renforcement est en général composée d'une pluralité de câbles disposés dans la direction longitudinale ou selon un angle relativement faible avec ladite direction de manière à conférer à la bande une rigidité d'extension appropriée dans la direction longitudinale pour résister aux efforts en cours d'utilisation.

Il est connu également de prévoir d'ajouter une armature supplémentaire de renforcement comportant un empilement de nappes formées chacune d'une pluralité de câbles ou fils de renfort disposés parallèlement les uns aux autres et pouvant se croiser d'une couche à une autre.

Parmi les véhicules équipés de chenilles en élastomère, on distingue deux familles selon la fonction remplie par les dents desdites chenilles. Dans une première famille, les dents ne jouent qu'un rôle de guidage, c'est-à-dire qu'une fois la chenille montée sur un véhicule, les dents se trouvent logées entre les flancs de deux roues du véhicule ce qui assure une bonne solidarité entre la chenille et le véhicule. Cette solution conduit toutefois à une usure plus ou moins prononcée des faces latérales des dents assurant le guidage par contact avec les flancs des roues de guidage; si l'usure devient trop prononcée, il est possible que, sous des efforts transversaux en virage, les dents sortent de leur logement entre les flancs des roues de guidage et qu'il soit alors impossible de contrôler la trajectoire du véhicule.

Dans une seconde famille de véhicules à chenille, les dents jouent à la fois un rôle de guidage et un rôle de transmission des efforts d'entraînement de la chenille. L'entraînement est réalisé par au moins une roue disposée à l'intérieur de la chenille et comportant une pluralité de barreaux orientés transversalement pour former une sorte de "cage d'écureuil", chaque dent de guidage et d'entraînement de la chenille s'intercalant entre deux barreaux de ladite roue. Chaque barreau de la roue d'entraînement prend appui sur la face avant d'une dent ce qui crée des contraintes de contact sur ladite face et des contraintes de cisaillement à l'intérieur de ladite dent. Ces contraintes peuvent être la cause d'usure des faces avant des dents (ou des faces arrière dans des mouvements rétrogrades) et donc d'un affaiblissement desdites dents ou encore de déchirure des dents sous des sollicitations de cisaillement répétitives. Comme cela a été décrit pour la première famille de véhicules, les dents assurent également le guidage du véhicule par leurs faces latérales en appui contre les roues d'entraînement; il s'ensuit également des usures plus ou moins prononcées desdites faces latérales.

Afin de réduire l'usure par frottement des faces latérales des dents, le document US 5,984,438 propose de pourvoir chaque dent de guidage avec un insert en résine thermoplastique débouchant sur au moins une des faces latérales desdites dents.

Une autre solution consiste à réaliser des dents dont le volume est relativement important de manière à présenter une grande quantité de matériau à user avant d'avoir à intervenir pour changer la chenille. Toutefois, on a constaté que pendant l'opération de moulage à l'intérieur d'un moule métallique, l'élévation de température provoque une dilatation des matériaux caoutchoutiques qui est nettement plus grande que la dilatation du moule métallique ; cette différence importante des dilatations est à l'origine de défauts au niveau des armatures de renforcement de la bande et en particulier de l'armature dont les renforts sont sensiblement longitudinaux. En effet, au droit de chaque dent de guidage, la dilatation du matériau élastomère en prenant appui sur le moule provoque un renflement à l'opposé du moule conduisant à une modification de la trajectoire de l'armature; l'armature présente alors une pluralité d'ondulations au droit de chaque dent qui, en utilisation sous forte tension et à cause des nombreux cycles successifs de variation de courbure imposés à ladite armature en utilisation, augmente la fatigue des renforts de ladite armature.

Mentionnons que la solution proposée dans le document déjà cité, US 5,984,438, ne résout pas ce dernier problème puisque, à moins de remplacer tout le volume de chaque dent par un insert, la différence de dilatation de l'élastomère par rapport à celle du métal du moule provoque toujours une modification de la géométrie de l'armature de renforcement.

D'autre part, c'est le volume important des dents relativement à l'épaisseur de la bande qui conduit à la détermination du temps de réticulation de ladite bande : pour atteindre un degré satisfaisant de réticulation en tous les points des dents(c'est-à-dire procurant des caractéristiques physiques optimales), il est nécessaire d'imposer une durée plus longue que la durée juste nécessaire pour assurer une bonne réticulation de la bande, ce qui est plus coûteux sur le plan industriel.

Dans ce qui suit on désigne par dent de guidage indifféremment une dent de chenille de la première ou de la seconde famille telles que décrites plus haut.

Un objet de l'invention est de proposer une chenille en élastomère pour véhicule ne présentant pas les inconvénients rappelés ci-dessus et en particulier une chenille dont les dents de guidage sont conçues pour réduire le temps de réticulation sans pour autant provoquer de déformation des armatures de renforcement.

Dans ce but, une chenille comporte :
- une bande formant une boucle fermée de largeur L présentant une surface intérieure et une surface extérieure espacées d'une épaisseur E, ladite bande étant principalement composée d'au moins un matériau élastomérique et renforcée par au moins une armature de renforcement longitudinal dont les éléments de renfort sont sensiblement disposés dans la direction longitudinale de la bande,
- une pluralité d'éléments de relief faisant saillie sur la surface extérieure, ces éléments de relief étant destinés à venir en contact avec le sol pour assurer une bonne motricité au véhicule équipé de cette chenille,
- une pluralité de dents de guidage de hauteur moyenne H faisant saillie sur la surface intérieure, ces dents de guidage comportant des faces latérales et des faces avant et arrière dans la direction longitudinale,
- au moins un insert disposé à l'intérieur de chaque dent de guidage,
cette chenille étant caractérisée en ce que :
- chaque insert placé dans chaque dent de guidage se présente sous une forme générale creuse ménageant un volume libre, la fonction remplie par cet insert étant d'absorber en grande partie la dilatation de l'élastomère de la dent de guidage pendant le moulage et la réticulation de la chenille et de diminuer le temps de cuisson de l'élastomère en homogénéisant le champ des températures à l'intérieur de la dent.

Préférentiellement, le volume de creux de chaque insert est au moins égal au volume supplémentaire dû à la dilatation de l'élastomère.

Dans la chenille selon l'invention, la présence d'au moins un insert ayant une forme générale creuse, c'est-à-dire qui réserve un volume pouvant être réduit par la dilatation de l'élastomère au cours du moulage et de la réticulation, présente l'avantage de réduire très sensiblement voire d'annuler totalement les variations de géométrie de l'armature de renforcement longitudinale pendant la réticulation tout en améliorant encore la liaison entre ledit insert et le matériau élastomérique par l'augmentation de surface de contact.

Dans un premier mode de réalisation, on peut prévoir que chaque insert creux est suffisamment déformable sous l'action des contraintes exercées par le matériau élastomérique en train de se dilater thermiquement afin d'absorber la plus grande partie de cette dilatation. De cette façon, on utilise une partie de la réserve de volume créé par la partie en creux de l'insert tout en maintenant une excellente liaison entre ledit insert et le matériau élastomérique de la dent de guidage.

Une autre variante consiste à prévoir sur chaque insert une région préférentiellement déformable par exemple en créant une région de faible rigidité se déformant plastiquement ou encore pouvant être perforée sous les efforts du matériau élastomérique.

Avantageusement, les inserts sont réalisés dans un matériau sensiblement plus conducteur thermiquement comparé au matériau élastomérique de chaque dent pour améliorer et homogénéiser le degré de réticulation à l'intérieur même de chaque dent de guidage.

Différentes formes peuvent être choisies pour réaliser les inserts comme par exemple une forme de cylindre creux bouché ou non à ses extrémités.

Une autre variante préférée consiste à réaliser chaque insert sous la forme d'un corps creux comportant au moins une ouverture pour laisser pénétrer le matériau élastomérique dans la partie creuse dudit insert pendant la réticulation dudit matériau. Par exemple, on peut employer un cylindre fermé à ses deux extrémités et comportant au moins un orifice pour le passage de la gomme, ledit cylindre ayant une section transversale circulaire, elliptique ou tout autre; la pénétration du matériau élastomérique à l'intérieur de l'insert assure un bon ancrage dudit insert à la dent.

La géométrie de section de chaque orifice peut être circulaire, ovale ou prendre la forme d'une fente allongée, étant entendu que l'ensemble des orifices d'un même cylindre doit être adapté pour laisser pénétrer la quantité voulue de matériau élastomérique.

Une combinaison des modes de réalisation précédemment décrits peut être mis en oeuvre par une personne du métier, par exemple en combinant un insert perforé et comportant des zones déformables.

Un résultat optimal est atteint, tant du point de la régularité de la géométrie de l'armature de renforcement longitudinal que de la géométrie de la dent moulée dès lors que chaque insert comporte une surface totale d'ouvertures calibrée en fonction de la viscosité du ou des différents matériaux élastomériques employés de manière à permettre, dans un temps de réaction en concordance avec le temps de moulage et de réticulation d'une chenille, le passage dans la partie creuse de l'insert de la quantité appropriée de mélange.

Pour réduire industriellement les durées nécessaires de moulage et de réticulation, il est judicieux de réaliser les inserts en matériaux présentant de bonnes qualités de conduction thermique afin d'augmenter la vitesse de diffusion des calories à l'intérieur des dents de moulages. Par matériaux thermiquement bons conducteurs, on peut citer : acier, alliages de cuivre ou d'aluminium, matériaux polymères comportant au moins une charge sous forme de particules métalliques. Les inserts peuvent être réalisés en PA66 chargé en copeaux d'aluminium ou en oxydes de fer (produits EMI-Guard de la Société Thermofil).

Préférentiellement, les inserts incorporés dans chaque dent de guidage ne débouchent sur aucune face afin d'obtenir un bon état de surface des parois latérales et des faces avant et arrière desdites dents.

Une chenille selon l'invention est soumise, pour assurer le guidage, à des efforts de contact sur les faces latérales de ses dents de guidage lesquels vont se traduire par une usure progressive desdites dents ; afin de prévenir l'utilisateur d'un niveau d'usure nécessitant une intervention sur la chenille, il est avantageux de pourvoir chaque insert et latéralement avec une partie de couleur différente de la couleur de la dent de guidage. Ainsi quand l'usure des faces latérales d'une dent a atteint un niveau jugé critique, une partie colorée de l'insert apparaît prévenant à temps l'utilisateur.

Avantageusement, on combine à cette fonction d'avertissement d'usure la présence d'un matériau qui n'endommage pas les roues de guidage du véhicule équipé de la chenille dès lors que l'insert apparaît sur l'une des surfaces latérales d'une dent notamment un alliage tribologique (notamment : bronze, alliage au molybdène), ou un élastomère résistant mieux à l'abrasion.

Cette fonction d'avertissement d'usure peut également être obtenue en réalisant l'ensemble de l'insert d'une couleur distincte de la couleur des dents de guidage.

Le principe de l'invention qui a été présenté pour la réalisation des dents d'une chenille peut être aisément appliqué à la réalisation des éléments de relief formant la sculpture de ladite chenille; il est en effet également judicieux de pourvoir chaque élément de sculpture avec au moins un insert de forme générale creuse capable d'absorber la dilatation du matériau élastomérique constitutif des éléments de sculpture pour éviter que cette dilatation ne modifie localement la géométrie des armatures de renforcement de la chenille.

D'autres caractéristiques et avantages de l'invention ressortent de la description faite ci-après en référence aux dessins annexés qui montrent, à titre d'exemples non limitatifs, des formes de réalisation de l'objet de l'invention et selon lesquels :
- la figure 1 montre une vue perspective d'une chenille en caoutchouc;
- la figure 2 montre une vue partielle des dents de guidage selon un premier mode de réalisation;
- la figure 3 montre une roue d'entraînement de type "cage d'écureuil";
- la figure 4 montre une coupe d'une dent de guidage d'une chenille réalisée dans un plan contenant la direction longitudinale de cette chenille;
- la figure 5 montre une coupe de la dent de guidage de la figure 4 selon V-V réalisée dans un plan perpendiculaire à la direction longitudinale de la chenille;
- la figure 6 montre une première variante de réalisation d'une dent de guidage selon l'invention vue dans un plan de coupe contenant la direction longitudinale d'une chenille ;
- la figure 7 montre la variante représentée à la figure 6 selon la ligne de coupe VII-VII réalisée sur cette même figure 6;
- la figure 8 montre sur une dent de guidage selon l'art antérieur, les isothermes pendant la vulcanisation des mélanges de caoutchouc;
- la figure 9 montre pour la dent de guidage représentée à la figure 6, les isothermes pendant la vulcanisation des mélanges de caoutchouc;
- la figure 10 montre une variante de réalisation d'une dent selon l'invention avant vulcanisation;
- la figure 11 montre la variante de la figure 10 après vulcanisation.

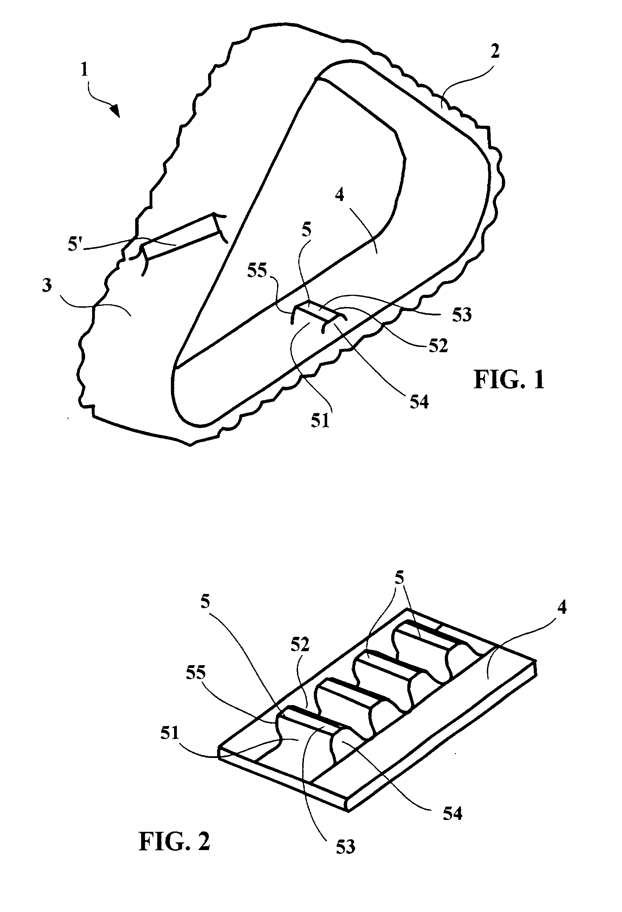

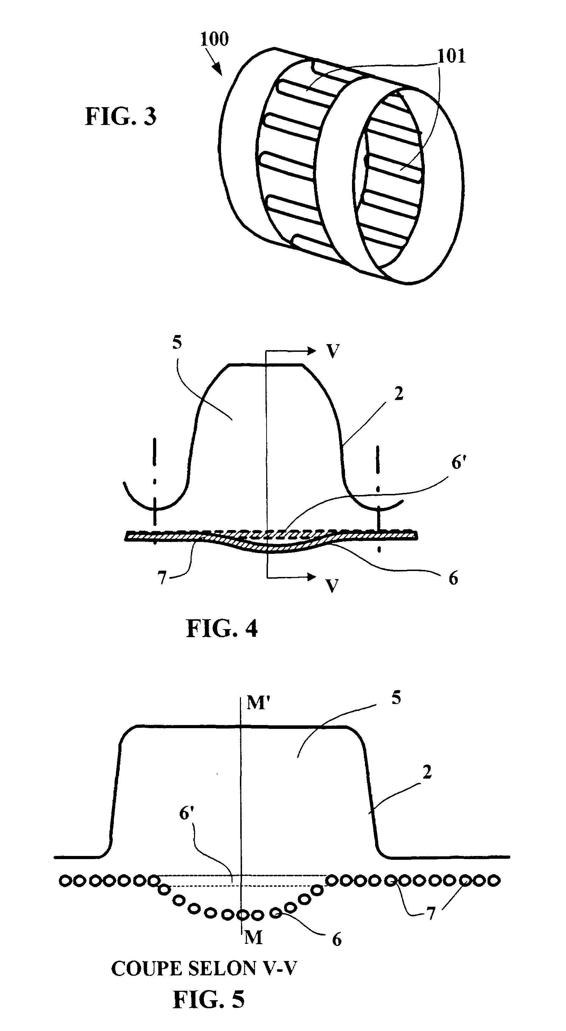

La chenille 1 représentée sur la figure 1, et en vue agrandie sur la figure 2, se présente sous la forme d'une bande continue 2 délimitée par des surfaces extérieure 3 et intérieure 4. On définit la direction longitudinale de la bande comme étant la direction de sa plus grande longueur et la direction transversale comme étant la direction perpendiculaire à la direction longitudinale et à l'épaisseur de cette bande (l'épaisseur correspondant à une distance moyenne séparant la surface intérieure 4 de la surface extérieure 3). La bande 2 est pourvue sur sa surface extérieure 3 d'une pluralité de protubérances 5' destinées à venir en contact avec le sol pendant le roulage de la chenille (par commodité, une seule protubérance 5' est représentée). La bande 2 est pourvue sur sa surface intérieure 4 d'une pluralité de dents de guidage 5 destinées à coopérer avec des moyens de guidage du véhicule sur lequel est montée la chenille 1. Chaque dent de guidage 5 comporte une face avant 51, une face arrière 52, une face supérieure 53 ainsi que deux faces latérales 54, 55 visibles sur la figure 2. Selon un mode de réalisation, montré en vue agrandie à la figure 2, ces dents 5 sont destinées à coopérer avec des flasques de roues de guidage contre lesquels elles viennent en contact par leurs faces latérales 54 et 55. Selon un autre mode de réalisation, les dents de guidage montrées sur la figure 2 sont destinées à coopérer avec des barreaux 101 d'une roue d'entraînement 100 de type cage d'écureuil comme représentée à la figure 3 ; dans ce dernier mode de réalisation, outre la fonction de guidage, les faces avant 51 ou les faces arrière 52 des dents de guidage 5 servent d'appui aux barreaux 101 dans le mouvement d'entraînement de la chenille en rotation par la roue d'entraînement 100.

Les figures 4 et 5 représentent respectivement des coupes longitudinale et transversale selon deux plans perpendiculaires d'une partie de chenille 2 selon l'état de la technique connu et au voisinage d'une dent de guidage 5; on distingue en outre sur cette coupe, une armature de renforcement 6 s'étendant sur une grande partie de la largeur de la chenille 2 et dans la direction longitudinale de celle-ci; dans le cas présent, cette armature 6 est composée d'une nappe de câbles 7 sensiblement alignés dans la direction longitudinale afin de conférer une quasi inextensibilité à la chenille dans cette direction. L'exemple choisi n'est en rien limitatif et l'on pourrait avoir une armature de renforcement formée d'une pluralité de nappe de câbles orientés longitudinalement ou encore des nappes de câbles formant un angle faible avec la direction longitudinale.

Sur la figure 4, tracée dans un plan contenant la direction longitudinale de la chenille, on montre la géométrie adoptée par l'armature de renforcement 6 après moulage et vulcanisation de ladite chenille et la géométrie souhaitée pour cette armature repérée par un tracé en traits pointillés 6'. La géométrie 6' correspond sensiblement à la géométrie de l'armature au moment de la confection de la bande, mais sous l'action de la déformation due à la dilatation du ou des mélanges de caoutchouc composant la dent 5 pendant la vulcanisation, il se produit une modification de la géométrie de cette armature 6 en regard de chaque dent de guidage. On constate, par ailleurs, que la dilatation du ou des mélanges constituant chaque dent de guidage provoque une modification de la distance inter câbles plus importante dans la partie médiane de chaque dent (repérée par la ligne MM' sur la figure 5 montrant la même dent de guidage suivant un plan de coupe V-V).

Ces modifications de géométrie de l'armature de renforcement conduisent à des cycles de déformations des câbles 7 de l'armature 6 préjudiciables sur la tenue mécanique en fatigue desdits câbles.

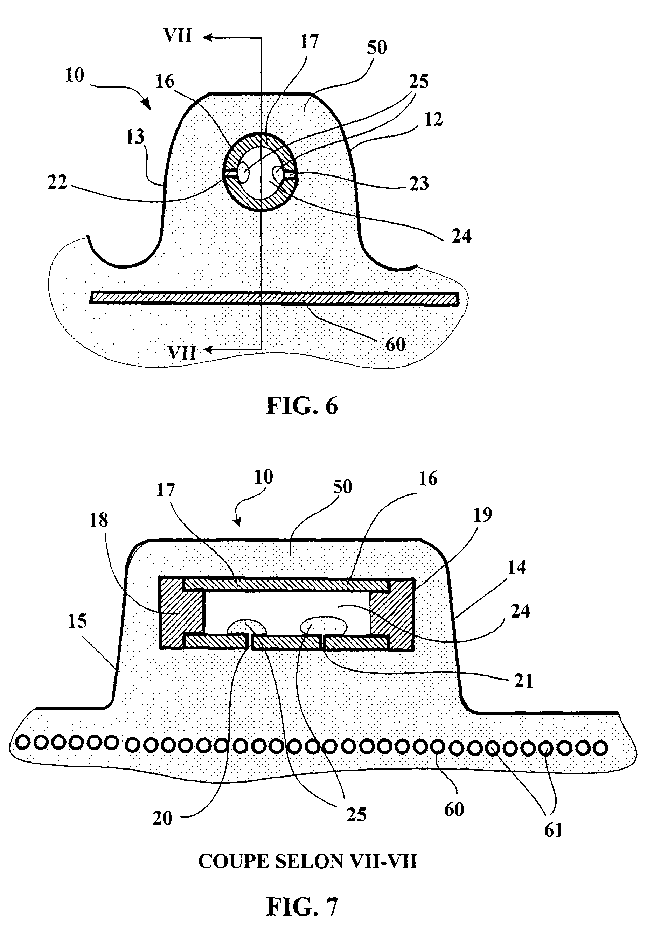

Une première variante de réalisation d'une chenille selon l'invention est présentée avec les figures 6 et 7 qui montrent des coupes respectivement longitudinale et transversale dans deux plans perpendiculaires d'une même chenille 10 après moulage et vulcanisation au voisinage d'une même dent de guidage 50.

Sur la figure 6, montrant une dent de guidage 50 après moulage, on distingue les traces des faces avant 12 et arrière 13 tandis que sur la figure 7 on distingue les traces des faces latérales 14 et 15 de la dent de guidage 50. Cette dent de guidage comprend un insert creux 16 bouché à ses deux extrémités axiales par des bouchons 18 et 19 visibles sur la figure 7. Cet insert creux 16 comprend un corps métallique 17 de forme générale cylindrique dont l'axe est sensiblement parallèle à la direction transversale de la chenille 10 et de section moyenne circulaire. Avant confection de la chenille 10, des bouchons 18 et 19 sont montés sur les extrémités axiales de ce corps 17 de manière à délimiter un volume de creux 24. En outre, il est prévu une pluralité d'orifices 20, 21, 22, 23 réalisés sur le corps 17 de l'insert 16 de manière à permettre au(x) mélange(s) de caoutchouc entourant ledit insert de remplir au moins en partie le volume du creux 24 pendant la phase de moulage et de vulcanisation sous l'effet de la dilatation du(des) mélanges de caoutchouc. Sur ces figures 6 et 7, on distingue des parties de gomme 25 ayant pénétré à l'intérieur de l'insert 16 par les orifices 20, 21.

La présence de l'insert creux 16 permet d'homogénéiser la répartition des températures dans la dent et de réduire sensiblement le temps nécessaire pour réaliser la vulcanisation.

Les orifices sont préférentiellement calibrés en fonction de la viscosité du caoutchouc composant les dents de guidage dans la gamme de températures s'étendant entre environ 100°C et la température de vulcanisation.

Sur ces figures 6 et 7 on constate que cet insert permet d'éliminer très sensiblement toute variation de géométrie de l'armature de renforcement 60 comportant une pluralité de câbles 61 en conservant sensiblement sa géométrie initiale (avant moulage et vulcanisation).

Une variante de l'exemple présenté avec le support des figures 6 et 7 consiste à réaliser le corps 17 dans un matériau non métallique tandis que les bouchons 18 et 19 le sont dans un matériau métallique.

Préférentiellement, l'insert 16 ne débouche sur aucune des faces latérales à l'état neuf de manière à ne pas endommager par frottement les moyens de guidage du véhicule équipé de la chenille selon l'invention.

Préférentiellement les bouchons 18, 19 sont réalisés dans un matériau, qui tout en résistant à une usure de frottement contre les moyens de guidage du véhicule, ne provoque pas eux-mêmes une usure trop prononcée desdits moyens. Outre des matériaux polymères bien connus tels que les polyamides, on pourra envisager des alliages dits tribologiques tels que le bronze.

Avantageusement, les bouchons 18 et 19 sont réalisés dans un matériau ayant une couleur distincte de la couleur du(des) mélanges de caoutchouc composant la dent 50 pour prévenir l'utilisateur d'une usure des faces latérales de ladite dent.

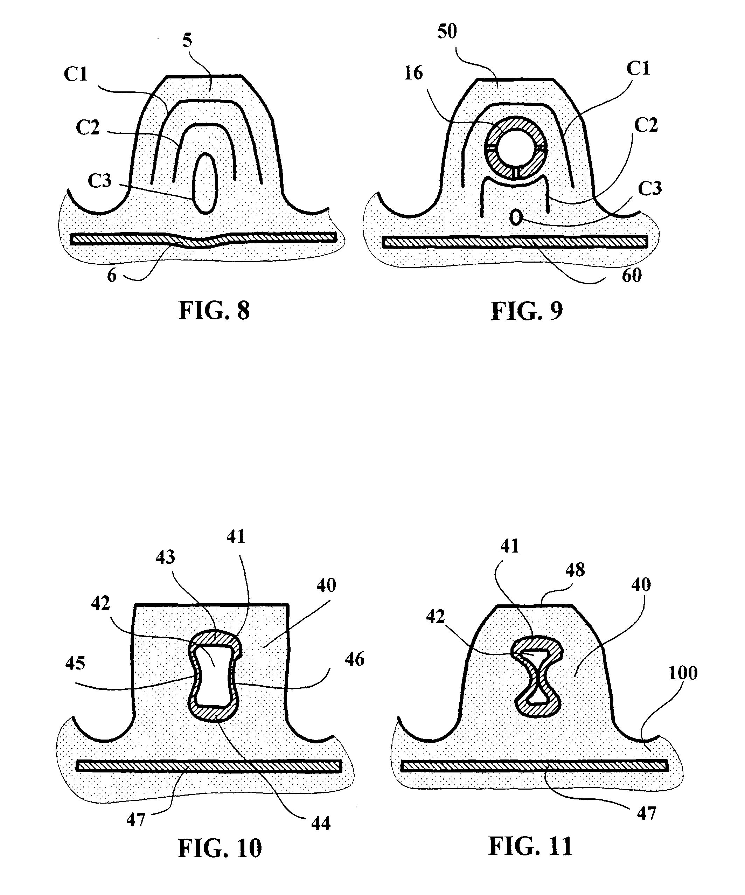

Outre l'effet positif sur la conservation de la géométrie de l'armature de renforcement, l'emploi d'un insert réalisé dans un matériau ayant une conductibilité thermique supérieure à la conductibilité thermique des mélanges de caoutchouc usuellement utilisés permet d'améliorer sensiblement la qualité de la vulcanisation des mélanges de gomme et tout en réduisant les temps de vulcanisation. Les figures 8 et 9 montrent précisément les isothermes de températures enregistrées pendant la vulcanisation d'une chenille à l'intérieur d'une dent de guidage selon l'état de la technique (figure 8) et selon l'invention (figure 9).

La figure 8 correspond aux enregistrements effectués pour une dent de guidage 5 d'une chenille de l'état de la technique comme celle représentée à la figure 4. Les courbes C1, C2, C3 sont des isothermes relevées pendant la vulcanisation après un temps T donné, la courbe C1 correspondant à une température supérieure à C2, C2 correspondant à une température supérieure à C3.

Sur la figure 9 correspondant aux relevés de températures après le même temps T pour une chenille selon l'invention et correspondant à celle décrite avec les figures 6 et 7, on a fait figurer les mêmes isothermes C1, C2, C3 à l'intérieur d'une dent de guidage 50 comportant un insert creux 16 meilleur conducteur thermique que les mélanges de caoutchouc environnants. On constate que l'isotherme C2 a atteint une partie située plus à l'intérieur de la dent (c'est-à-dire plus près de l'armature 60 de la dent) et que l'isotherme C3 est pratiquement entièrement située au niveau de l'armature 60. Ceci est favorable sur le plan industriel puisque le temps de vulcanisation de la chenille selon l'invention peut être sensiblement réduit, les parties les plus à l'intérieur des dents atteignant plus rapidement la température souhaitée de vulcanisation. En outre, la structure d'une dent selon l'invention permet d'éviter des phénomènes de sur-cuisson des parties les plus à l'extérieur (c'est-à-dire les plus proches des parois du moule) qui sont soumises moins longtemps à des températures élevées comparé au cas d'une chenille selon l'état de la technique.

Une autre variante de réalisation montrée avec les figures 10 et 11. La figure 10 montre en coupe longitudinale une vue partielle d'une dent de guidage 40 selon l'invention avant moulage; cette dent 40 comprend un insert 41 réalisé en matériau coloré dans la masse et ayant une forme générale cylindrique creuse, non bouchée à ses extrémités axiales, dont la section transversale forme de manière imparfaite le chiffre "huit" pour délimiter un volume de creux 42. Par ailleurs, l'épaisseur de paroi de cet insert n'est pas constante de manière à créer des zones avant et arrière 45 et 46 d'épaisseur sensiblement réduite par rapport à l'épaisseur des autres zones 43 et 44. Ces zones 45, 46 d'épaisseur réduite sont comparables à des zones de faiblesse pouvant se déformer préférentiellement par rapport aux autres zones sous l'action des efforts résultant de la dilatation des mélanges comme cela est montré avec la figure 11 représentant la même dent 40 après moulage et vulcanisation de la chenille 100. On constate que l'absorption de la déformation de dilatation des mélanges par la déformation de l'insert 41 et la réduction du volume de creux 42 a permis d'éviter la modification de la géométrie de l'armature de renforcement 47.

Dans une autre variante non représentée sous forme de figure, on prévoit que les zones de faiblesse sont situées près de la surface supérieure 48 de la dent de guidage et / ou près de l'armature 47. Si chaque dent est constituée par une pluralité de mélanges de gomme, il est judicieux de localiser les zones de faiblesse (et les orifices quand il y en a) au voisinage du ou des mélanges ayant les coefficients de dilatation les plus élevés.

La surface extérieure de chaque dent selon l'invention, comprenant à la fois les faces avant et arrière et les faces latérales, peut, et comme cela est largement connu et pratiqué dans le domaine des courroies crantées, être renforcée par au moins un tissu textile jouant le rôle de protection contre les agressions externes.

L'invention n'est pas limitée aux exemples décrits et représentés et diverses modifications peuvent y être apportées sans sortir de son cadre. En particulier, l'application de l'invention aux motifs de relief formant la sculpture de la chenille (c'est-à-dire les motifs moulés sur la surface extérieure de la bande formant la chenille) présente le même intérêt puisqu'il est ainsi possible d'absorber l'écart de dilatation des mélanges constitutifs desdits motifs par rapport à la dilatation des pièces de moule.

## Revendications

1. Chenille (10, 100) en matériau élastomérique comportant :
- une bande formant une boucle fermée présentant une surface intérieure et une surface extérieure, ladite bande étant principalement composée de matériau élastomérique et renforcée par au moins une armature de renforcement (60, 47) dont les éléments de renfort sont sensiblement orientés dans la direction longitudinale de la bande,
- une pluralité d'éléments de relief faisant saillie sur la surface extérieure, ces éléments de relief étant destinés à venir en contact avec le sol pour assurer une bonne motricité au véhicule équipé de cette chenille,
- une pluralité de dents de guidage (50, 40) en matériau élastomérique faisant saillie sur la surface intérieure, ces dents de guidage comportant des faces latérales et des faces avant et arrière dans la direction longitudinale,
- au moins un insert (16, 41) disposé à l'intérieur de chaque dent de guidage (50, 40) ou à l'intérieur de chaque élément de relief sur la surface extérieure,
cette chenille étant **caractérisée en ce que** :
- chaque insert (16, 41) se présente sous une forme générale creuse ménageant un volume libre (24, 42) pour absorber en grande partie la dilatation du matériau élastomérique entourant ledit insert dans la dent de guidage ou de l'élément de relief pendant le moulage et la réticulation du matériau élastomérique de la chenille (10, 100).

2. Chenille (10, 100) selon la revendication 1 **caractérisée en ce que** le volume de creux (24, 42) est au moins égal au volume de la dilatation des matériaux élastomériques entourant chaque insert formant les dents de guidage ou les éléments de relief pendant la réticulation desdits matériaux.

3. Chenille (100) selon la revendication 1 ou la revendication 2 **caractérisée en ce qu'**au moins un insert creux (41) comprend une zone de faiblesse (45, 46) apte à se déformer sous l'action des efforts exercés par la gomme au cours de sa dilatation thermique de façon à réduire sensiblement le volume initial occupé par ledit insert et ainsi absorber la plus grande partie de cette dilatation.

4. Chenille (100) selon la revendication 3 **caractérisée en ce que** la zone de faiblesse (45, 46) est d'épaisseur réduite par rapport aux autres parties (43, 44) de l'insert et appropriée pour pouvoir se déformer sous l'action de la dilatation des matériaux entourant ledit insert et réduire le volume de creux (42).

5. Chenille selon la revendication 4 **caractérisée en ce que** la zone de faiblesse est d'épaisseur appropriée pour être perforée par les matériaux entourant ledit insert sous l'action de la dilatation desdits matériaux.

6. Chenille (10) selon l'une des revendications 1 à 5 **caractérisée en ce que** au moins un insert creux (16) est pourvu d'au moins un orifice (20, 21, 22, 23) pour permettre aux matériaux, entourant cet insert, de pénétrer à l'intérieur dudit insert sous l'effet de la dilatation thermique desdits matériaux.

7. Chenille (10) selon la revendication 6 **caractérisée en ce que** chaque orifice (20, 21, 22, 23) est calibré en fonction de la viscosité du ou des différents matériaux élastomériques entourant l'insert (16) de manière à permettre le passage dans la partie creuse (24) de l'insert d'une quantité suffisante de matière afin d'absorber sensiblement la totalité la dilatation desdits matériaux.

8. Chenille (10) selon l'une des revendications 1 à 7 **caractérisée en ce que** au moins un insert creux (16) est de forme cylindrique d'axe sensiblement parallèle à la direction transversale de la chenille et **en ce qu'**il présente au moins une partie (18, 19) d'une couleur distincte de la couleur des matériaux des dents de guidage/ éléments de relief afin de prévenir d'une usure trop prononcée desdites dents/desdits éléments de relief.

9. Chenille (10, 100) selon l'une des revendications 1 à 8 **caractérisée en ce que** l'insert creux comprend au moins une partie métallique ayant une conductibilité thermique supérieure à la conductibilité thermique du matériau élastomérique constituant chaque dent/élément de relief de la chenille.

10. Chenille (10, 100) selon la revendication 9 **caractérisée en ce que** partie métallique est réalisée avec un alliage choisi parmi des alliages tribologiques, notamment bronze et alliages au molybdène.

## Patentansprüche

1. Gleiskette (10, 100) aus Elastomermaterial, mit:
- einem Band, das eine geschlossene Schlaufe bildet, das eine Innenoberfläche und eine Außenoberfläche aufweist, wobei das genannte Band hauptsächlich aus mindestens einem Elastomermaterial zusammengesetzt ist und mit mindestens einer Verstärkungsbewehrung (60, 47) versehen ist, deren Verstärkungselemente im wesentlichen in Längsrichtung des Bandes ausgerichtet sind,
- einer Vielzahl von vorspringenden Elementen, die auf der Außenoberfläche überstehen, wobei diese Elemente dazu bestimmt sind, mit dem Boden in Berührung zu gelangen, um dem Fahrzeug eine gute Motorik zuzusichern, das mit dieser Kette ausgestattet ist,
- einer Vielzahl von Führungszähnen (50, 40) aus Elastomermaterial, die auf der Innenoberfläche überstehen, wobei diese Führungszähne seitliche Flächen sowie in Längsrichtung vordere und hintere Flächen aufweisen, und
- mindestens einer Einlage (16, 41), die im Inneren eines jeden Führungszahnes (50, 40) oder im Inneren eines jeden vorspringenden Elements auf den Außenoberfläche angeordnet ist,
wobei die genannte Gleiskette **dadurch gekennzeichnet ist, daß**:
- jede Einlage (16, 41) sich unter einer allgemeinen Hohlform darbietet, die ein freies Volumen (24, 42) ausspart, um einen großen Teil der Dehnung des Elastomermaterials zu absorbieren, das die genannte Einlage im Führungszahn oder im vorspringenden Element während des Abformens und der Vernetzung des Elastomermaterials der Gleiskette (10, 100) umgibt.

2. Gleiskette (10, 100) nach Anspruch 1, **dadurch gekennzeichnet, daß** das Hohlvolumen (24, 42) mindestens gleich ist dem Volumen der Dehnung der Elastomermaterialien, die jede Einlage umgeben und die während der Aushärtung der genannten Materialien Führungszähne oder die vorspringenden Elemente formen.

3. Gleiskette (100) nach Anspruch 1 oder Anspruch 2, **dadurch gekennzeichnet, daß** mindestens eine hohle Einlage (41) eine Schwächungszone (45, 46) aufweist, die dazu eingerichtet ist, sich unter Wirkung der Kräfte zu verformen, die durch den Gummi im Verlauf seiner thermischen Dehnung ausgeübt werden, um auf diese Weise spürbar das Anfangsvolumen zu verringern, das von der genannten Einlage eingenommen wird, und so den größten Teil dieser Dehnung zu absorbieren.

4. Gleiskette (100) nach Anspruch 3, **dadurch gekennzeichnet, daß** die Schwächungszone (45, 46), im Verhältnis zu den anderen Teilen (43, 44) der Einlage, eine verringerte Dicke hat und dazu eingerichtet ist, sich unter der Wirkung der Dehnung der Materialien verformen zu können, die die genannte Einlage umgeben, und das Hohlvolumen (42) zu verringern.

5. Gleiskette nach Anspruch 4, **dadurch gekennzeichnet, daß** die Schwächungszone eine geeignete Dicke hat, um von den Materialien, die die genannten Einlage umgeben, unter Wirkung der Dehnung der genannten Materialien perforiert zu werden.

6. Gleiskette (10) nach einem der Ansprüche 1 bis 5, **dadurch gekennzeichnet, daß** mindestens eine hohle Einlage (16) mit mindestens einer Öffnung (20, 21, 22, 23) versehen ist, um es den Materialien, die diese Einlage umgeben, zu gestatten, unter Wirkung der thermischen Dehnung der genannten Materialien in das Innere der genannten Einlage einzudringen.

7. Gleiskette (10) nach Anspruch 6, **dadurch gekennzeichnet, daß** jede Öffnung (20, 21, 22, 23) in Abhängigkeit von der Viskosität des Elastomermaterials oder der verschiedenen Elastomermaterialien kalibriert ist, die die Einlage (16) umgeben, um auf diese Weise den Durchtritt einer ausreichenden Menge von Material in den hohlen Teil (24) der Einlage zu gestatten, um im wesentlichen die gesamte Dehnung der genannten Materialien zu absorbieren.

8. Gleiskette (10) nach einem der Ansprüche 1 bis 7, **dadurch gekennzeichnet, daß** mindestens eine hohle Einlage (16) zylindrische Form mit einer Achse hat, die im wesentlichen parallel zur Querrichtung der Gleiskette verläuft, und daß sie mindestens einen Teil (18, 19) mit einer Farbe aufweist, die von der Farbe der Materialien der Führungszähne/vorspringenden Elemente verschieden ist, um eine zu große Abnutzung der genannten Zähne/ der genannten vorspringenden Elemente frühzeitig zu melden.

9. Gleiskette (10, 100) nach einem der Ansprüche 1 bis 8, **dadurch gekennzeichnet, daß** die hohle Einlage mindestens einen Teil aus Metall aufweist, der eine Wärmeleitfähigkeit aufweist, die höher ist als die Wärmeleitfähigkeit des Elastomermaterials, das jeden Zahn/jedes vorspringende Element der Gleiskette bildet.

10. Gleiskette (10, 100) nach Anspruch 9, **dadurch gekennzeichnet, daß** der Teil aus Metall mit einer Legierung hergestellt ist, die unter den tribologischen Legierungen gewählt ist, besonders Bronze und Legierungen mit Molybdän.

## Claims

1. Caterpillar (10, 100) made of an elastomer material, comprising:
- a strip forming a closed loop with an inside surface and an outside surface, the said strip mainly consisting of an elastomer material and being reinforced by at least one reinforcement armature (60, 47) whose reinforcing elements are essentially orientated in the longitudinal direction of the strip;
- a plurality of relief elements projecting from the outside surface, these relief elements being intended to make contact with the ground to ensure good traction of the vehicle fitted with the said caterpillar;
- a plurality of guide teeth (50, 40) made of an elastomer material and projecting from the inside surface, these guide teeth comprising lateral faces and front and rear faces in the longitudinal direction;
- at least one insert (16, 41) arranged inside each guide tooth (50, 40) or inside each relief element on the outside face,
the said caterpillar being
**characterised in that**
- each insert (16, 61) has a generally hollow shape forming a free volume (24, 42) to absorb in large measure the expansion of the elastomer material surrounding the said insert in the guide tooth or relief element during the moulding and cross-linking of the elastomer material of the caterpillar (10, 100).

2. Caterpillar (10, 100) according to Claim 1,
**characterised in that**
the hollow volume (24, 42) is at least equal to the expansion volume of the elastomer materials surrounding each insert and forming the guide teeth or relief elements during the cross-linking of the said materials.

3. Caterpillar (100) according to Claims 1 or 2,
**characterised in that**
at least one hollow insert (41) comprises a zone of weakness (45, 46) that can deform under the action of the forces exerted by the rubber during its thermal expansion, so as appreciably to reduce the initial volume occupied by the said insert and thus to absorb most of the said expansion.

4. Caterpillar (100) according to Claim 3,
**characterised in that**
the zone of weakness (45, 46) is thinner than the other parts (43, 44) of the insert, and is able to deform under the effect of the expansion of the materials surrounding the said insert, so reducing its hollow volume (42).

5. Caterpillar according to Claim 4,
**characterised in that**
the zone of weakness has a thickness that allows it to be perforated by the materials surrounding the said insert under the effect of the expansion of the said materials.

6. Caterpillar (10) according to any of Claims 1 to 5,
**characterised in that**
at least one hollow insert (16) is provided with at least one orifice (20, 21, 22, 23) to allow the materials surrounding the insert to penetrate inside the said insert under the action of the thermal expansion of the said materials.

7. Caterpillar (10) according to Claim 6,
**characterised in that**
each orifice (20, 21, 22, 23) is sized as a function of the viscosity of the various elastomer material(s) surrounding the insert (16), so as to allow the passage into the hollow portion (24) of the insert of a quantity of material sufficient to absorb essentially the whole of the expansion of the said materials.

8. Caterpillar (10) according to any of Claims 1 to 7,
**characterised in that**
at least one hollow insert (16) is of cylindrical shape with its axis essentially parallel to the transverse direction of the caterpillar, and at least one part (18, 19) thereof has a colour different from that of the materials of the guide teeth/relief elements, so as to give warning of the excessive wear of the said teeth/relief elements.

9. Caterpillar (10, 100) according to any of Claims 1 to 8,
**characterised in that**
the hollow insert comprises at least one metallic portion having thermal conductivity higher than that of the elastomer material constituting each of the caterpillar's teeth/relief elements.

10. Caterpillar (10, 100) according to Claim 9,
**characterised in that**
the said metallic portion is made from an alloy chosen from among the tribological alloys, in particular bronze and molybdenum alloys.
